# FASCICULE DE BREVET EUROPEEN

(11) **EP 2 702 381 B1**
(45) Date de publication et mention de la délivrance du brevet: **23.01.2019**
(21) Numéro de dépôt: 12722880.7
(22) Date de dépôt: 27.04.2012
(51) Int. Cl.: G01M 3/26

(54) **PROCEDE ET DISPOSITIF POUR MESURER L'ETANCHEITE A L'AIR**
VERFAHREN UND VORRICHTUNG ZUR MESSUNG DER LUFTDICHTIGKEIT
METHOD AND DEVICE FOR MEASURING AIR TIGHTNESS

(30) Priorité: 27.04.2011 FR 1153612
(43) Date de publication de la demande: 05.03.2014
(73) Titulaire: Tritz, Robert, 35730 Pleurtuit (FR)
(72) Inventeur: Tritz, Robert, 35730 Pleurtuit (FR)
(74) Mandataire: Cabinet Poncet
(86) Numéro de dépôt international: PCT/IB2012/052121
(87) Numéro de publication internationale: WO 2012/147057

(56) Documents cités:
- EP-A2- 1 156 315
- US-A- 4 363 236
- US-A- 4 517 826
- Anonymous: "Blower windows (blower door alternative) for measuring air infiltration", , 19 décembre 2010 (2010-12-19), XP055018610, Extrait de l'Internet: URL:http://web.archive.org/web/20101219085 644/http://nlcpr.com/Pressuretesting.php [extrait le 2012-02-07]

## Description

### DOMAINE TECHNIQUE DE L'INVENTION

La présente invention concerne les procédés et dispositifs pour mesurer l'étanchéité à l'air de l'enveloppe isolante d'un local.

L'enveloppe isolante d'un local est destinée à isoler l'espace intérieur d'un local vis-à-vis de l'atmosphère extérieure, pour éviter les échanges gazeux entre l'espace intérieur et l'atmosphère extérieure.

Dans la pratique, l'enveloppe isolante d'un local comporte toujours des imperfections (joints défectueux, prises de courant, fentes...), qui réduisent son étanchéité. La qualité de l'enveloppe est appréciée en mesurant cette étanchéité.

Une enveloppe présentant une bonne étanchéité permet de maîtriser les flux d'énergie entre l'espace intérieur du local et l'atmosphère extérieure, et d'éviter que l'humidité intérieure du local se propage jusqu'à l'isolant thermique de la paroi et le dégrade.

Le procédé pour mesurer l'étanchéité à l'air de l'enveloppe d'un local est généralement appelé test d'infiltrométrie. Au cours d'un tel test, on crée artificiellement une différence de pression entre l'intérieur et l'extérieur du local à tester, à l'aide d'un ventilateur dédié, et l'on évalue la quantité d'air qui traverse l'enveloppe par les fuites de l'enveloppe. Simultanément, en présence de la différence de pression entre l'intérieur et l'extérieur du local, on peut localiser les fuites de l'enveloppe, et connaître ainsi les endroits à colmater pour supprimer les infiltrations d'air parasite.

Pour effectuer le test, on utilise un équipement de test appelé infiltromètre, comprenant une porte soufflante apte à remplacer une porte préexistante obturant une ouverture de l'enveloppe du local, avec des moyens pour assurer l'étanchéité périphérique autour de la porte soufflante vis-à-vis de la paroi d'enveloppe, et avec au moins un ventilateur apte à créer une différence de pression d'air entre l'espace intérieur du local et l'atmosphère extérieure. Un moteur, alimenté par une source d'énergie électrique, entraîne en rotation le ventilateur selon une série de séquences de rotation distinctes aptes à créer une série de différences de pression d'air choisies et étagées entre une valeur minimale et une valeur maximale de différence de pression. Pendant chaque séquence de rotation, la vitesse de rotation du ventilateur est constante. Pour passer d'une séquence de rotation à une autre, la modification de différence de pression est obtenue par la manoeuvre d'un diaphragme permettant de modifier la section de passage de l'air dans le ventilateur, et donc le débit du ventilateur. Des capteurs de pression permettent de mesurer la différence de pression au cours de chaque séquence de rotation, entre l'espace intérieur du local et l'atmosphère extérieure.

Dans les procédés et dispositifs connus, qui mettent en oeuvre la norme NF EN 13829, un pressostat mesure la différence de pression établie, un manomètre infiltrométrique mesure la pression dynamique au niveau du passage d'air du ventilateur. D'après l'étalonnage du ventilateur, la pression dynamique est convertie en un débit de fuite nécessaire à l'établissement de la différence de pression. La mesure est effectuée pour plusieurs différences de pression entre 10 et 100 Pa. On réalise ensuite une régression linéaire des points mesurés selon la méthode des moindres carrés, ce qui permet de connaître le débit de fuite quelle que soit la différence de pression entre l'intérieur et l'extérieur du local.

Avant et après les tests, on doit mesurer la stabilité de la pression à débit nul dans le ventilateur sur une période de 30 s au moins. Selon la norme NF EN 13829, lorsque la fluctuation de pression est supérieure à 5 Pa, la mesure n'est pas considérée comme valable. Les instabilités sont souvent dues à un vent trop fort ou en rafales. En pratique, les mesures sont impossibles lorsque la vitesse du vent est supérieure ou égale à 3 m/s.

On en déduit ensuite des indicateurs de perméabilité à l'air :
- l'indicateur Q4Pa-surf, utilisé dans certaines réglementations telles que RT2005, est égal au débit de fuite sous une dépression de 4 Pa divisé par la surface des parois froides (hors planchers bas) ;
- l'indicateur n50 est le débit de fuite sous 50 Pa divisé par le volume chauffé ; il est utilisé dans d'autres réglementations, avec une valeur maximale fixée à 0,6 vol/h.

Dans ces dispositifs connus, il est nécessaire d'effectuer un étalonnage du pressostat, un étalonnage du manomètre infiltrométrique, et un étalonnage du diaphragme. Le dispositif nécessite en outre que l'opérateur effectue correctement les opérations de mesure de la stabilité de pression à débit nul avant et après les tests, afin de vérifier l'absence d'instabilité. Autrement dit, la qualité des résultats obtenus par les tests dépend fortement de l'habileté et de la conscience professionnelle de l'opérateur. De la sorte, il est nécessaire que l'opérateur soit qualifié et expérimenté pour effectuer les mesures, ce qui n'est généralement pas à la portée des entrepreneurs de bâtiment.

En outre, les tests ne sont pas possibles en cas d'instabilité prolongée dans l'atmosphère extérieure, ou en cas de présence d'un vent trop fort à l'extérieur du local.

En outre, ces dispositifs connus ne sont pas conçus pour être adaptés aisément à la mesure d'étanchéité à l'air de locaux dont les volumes sont différents, ces dispositifs étant chacun adaptés au contrôle de locaux dont les volumes sont voisins d'un volume nominal donné, sans possibilité d'adaptation à des volumes différents.

Du fait de la nécessité de multiplier les étalonnages des parties du dispositif, il en résulte une précision de mesure relativement médiocre.

Le document EP 1 156 315 A décrit un infiltromètre dont le but est d'être compact et portatif, dans lequel la modification de différence de pression est obtenue pour cela par changement de la vitesse de rotation du ventilateur au moyen d'une commande électronique à microcontrôleur. Lors de chaque mesure, la différence de pression est réglée en agissant sur la vitesse du ventilateur. Le débit de flux d'air dans le ventilateur est calculé par approximation en fonction de la différence de pression et de la vitesse du ventilateur. La précision obtenue est de 10%, et dépendante du volume du local, mais estimée suffisante dans ce document. Le document ne mentionne pas les difficultés d'effectuer des tests en cas de vent fort ou d'instabilité prolongée de l'atmosphère extérieure.

Le document US 4,363,236 A décrit un infiltromètre dont le but est de mesurer les fuites structurelles d'un local sans nécessiter la présence d'un vent extérieur, et en ajustant continuellement l'infiltromètre en fonction de l'obturation progressive des fuites du local pour limiter la dépression. Pour cela, le document décrit un anémomètre à lecture directe placé dans un tronçon de sortie du passage d'air, et un clapet manoeuvré à la main pour modifier la section de passage d'air en amont du ventilateur. Les fuites sont caractérisées par la vitesse du flux d'air (en pieds par minute) mesurée par l'anémomètre. Le débit du flux d'air n'est pas considéré.

### EXPOSE DE L'INVENTION

Le problème proposé par la présente invention est de prévoir des moyens et procédés pour mesurer la valeur totale des fuites d'un local, indépendamment des conditions extérieures de vent, avec une meilleure précision, et avec une plus grande facilité de mise en oeuvre.

Selon un autre objet, l'invention a pour but de concevoir un dispositif de mesure qui présente une meilleure flexibilité pour une adaptation à des locaux de tailles et volumes différents.

Pour atteindre ces buts ainsi que d'autres, et selon un premier aspect de l'invention, on prévoit un procédé pour mesurer l'étanchéité à l'air de l'enveloppe isolant l'espace intérieur d'un local vis-à-vis de l'atmosphère extérieure, comprenant les étapes suivantes :
a) dans au moins une ouverture de l'enveloppe, disposer une porte soufflante munie d'au moins un ventilateur apte à créer une différence de pression d'air entre l'espace intérieur du local et l'atmosphère extérieure,
b) entraîner en rotation le ventilateur selon une série de séquences de rotation distinctes aptes à créer une série de différences de pression d'air choisies et étagées entre une valeur minimale et une valeur maximale de différence de pression,
c) mesurer la différence de pression au cours de chaque séquence de rotation,
d) évaluer le débit de fuite de l'enveloppe au cours de chaque séquence de rotation,
e) en déduire le débit de fuite de l'enveloppe pour une différence de pression d'air normalisée ;
dans ce procédé :
- au cours de l'étape b), on modifie les différences de pression d'air par une modification de la vitesse du ventilateur,
- au cours de chaque séquence de rotation de l'étape b), on régule la différence de pression d'air pour la maintenir dans une plage de variation inférieure à un écart prédéfini en agissant sur la vitesse du ventilateur ;
selon l'invention :
- au cours de l'étape d), on mesure directement la vitesse du flux d'air dans le ventilateur, et on en déduit le débit de fuite de l'enveloppe par calcul à l'aide d'une fonction de transfert.

Une caractéristique importante de ce procédé est que l'on effectue la mesure d'étanchéité à l'air par une mesure directe du flux d'air tout en stabilisant la différence de pression d'air entre l'espace intérieur du local et l'atmosphère extérieure par une action sur la vitesse du ventilateur pendant chaque séquence de rotation.

Grâce à la régulation de la différence de pression d'air, on rend la mesure d'étanchéité quasiment indépendante des conditions extérieures de vent, ce qui améliore sensiblement la précision de la mesure. Cette précision peut encore être améliorée grâce au fait que l'indépendance vis-à-vis des conditions extérieures de vent permet d'effectuer des mesures en plus grand nombre et sur une plus grande période de temps, pour en obtenir une moyenne plus fiable. Cette précision est également améliorée grâce à la mesure directe de la vitesse de flux d'air dans le ventilateur, mesure qui peut être effectuée de façon précise pour une série de valeurs différentes de flux d'air sans avoir à modifier la géométrie de passage de l'air dans le ventilateur. Ces améliorations rendent possible la mise en oeuvre efficace d'un tel procédé par des opérateurs non qualifiés. De la sorte, le procédé peut être utilisé par les entrepreneurs de bâtiment eux-mêmes, qui réalisent un auto-contrôle du bâtiment avant le contrôle ultérieur par l'Administration.

Grâce au fait que la série de valeurs de flux d'air est obtenue en agissant sur la vitesse du ventilateur, on peut assurer des mesures sans modifier la géométrie du passage d'air.

Selon un mode de réalisation avantageux, on peut mesurer la vitesse du flux d'air à l'aide d'un capteur à fil chaud. Cela permet de réaliser des mesures précises et fiables, à l'aide d'un dispositif robuste, fiable et peu onéreux.

De préférence, à chaque séquence de rotation, on peut relever la valeur de vitesse du flux d'air par une série de mesures effectuées pendant une période de temps prédéfinie. On élimine ainsi l'influence néfaste des perturbations résiduelles dues éventuellement aux instabilités du vent.

Dans tous les cas, il est préférable de prévoir une étape préalable d'étalonnage du ventilateur pour déterminer la fonction de transfert entre la vitesse du flux mesurée par le capteur à fil chaud et le débit du ventilateur.

Grâce au fait que le flux est piloté par une variation de vitesse du ventilateur, un tel procédé et dispositif est adapté pour une large plage de volumes de locaux à tester.

On peut augmenter cette plage en prévoyant une pluralité de portes soufflantes, et :
- en fonction du volume de l'espace intérieur du local à tester, on dispose un nombre approprié de portes soufflantes,
- au cours de l'étape b), on agit sur la vitesse des ventilateurs de toutes les portes soufflantes pour réguler la différence de pression d'air,
- au cours de l'étape d), on somme les mesures de débit d'air des portes soufflantes.

Selon un autre aspect de l'invention, on prévoit un dispositif pour mesurer l'étanchéité à l'air de l'enveloppe isolant l'espace intérieur d'un local vis-à-vis de l'atmosphère extérieure, comprenant :
- au moins une porte soufflante ayant elle-même au moins un ventilateur associé à un canal de passage d'air,
- un moteur d'entraînement du ventilateur,
- une alimentation et des moyens de commande pour piloter la rotation du moteur,
- des moyens de mesure de la pression différentielle entre l'atmosphère extérieure et l'espace intérieur du local à tester,
- les moyens de commande comprenant des moyens pour piloter la vitesse de rotation du moteur à des vitesses différentes de façon à établir la pression différentielle selon une série de valeurs de pression différentielle choisies entre une valeur minimale et une valeur maximale de pression différentielle, et de façon à maintenir la pression différentielle au voisinage de chaque valeur choisie, dans une plage de variation inférieure à un écart prédéfini ;
selon l'invention :
- les moyens pour évaluer le débit de fuite de l'enveloppe comprennent un capteur de vitesse de flux d'air dans le canal de passage d'air,
- les moyens pour évaluer le débit de fuite de l'enveloppe comprennent des moyens de calcul aptes à calculer le débit d'air dans le passage d'air en fonction de la vitesse du flux d'air par application d'une fonction de transfert.

Une telle combinaison reprend, sous forme de dispositif, les moyens du procédé défini ci-dessus, et permet d'obtenir les mêmes avantages.

Dans un tel dispositif, le capteur de vitesse de flux d'air peut avantageusement être un capteur à fil chaud.

Selon un mode de réalisation avantageux, le canal de passage d'air est un manchon comportant un tronçon généralement cylindrique dont une première extrémité se raccorde à une gaine où est logé le ventilateur et dont la seconde extrémité se raccorde à un tronçon évasé selon un profil longitudinal en arc.

Une telle forme de canal permet de réaliser une fonction de transfert régulière entre la vitesse du flux mesurée par le capteur à fil chaud et le débit du ventilateur, dans une large plage de variations de débit.

De préférence, on peut prévoir que :
- le tronçon cylindrique présente une longueur sensiblement quatre fois supérieure à la longueur du tronçon évasé,
- le profil longitudinal du tronçon évasé est en quart de cercle,
- le capteur à fil chaud est placé en partie médiane de la longueur du canal de passage d'air.

Quant aux moyens de mesure de la pression différentielle, on peut avantageusement prévoir un premier capteur de pression apte à produire un premier signal de pression image de la pression d'air dans l'espace intérieur du local à tester, et un second capteur de pression apte à produire un second signal de pression image de la pression d'air dans l'atmosphère extérieure à l'écart de l'enveloppe du local à tester.

Il est important que le second capteur de pression soit disposé suffisamment à l'écart de l'enveloppe du local à tester, afin d'éviter l'influence de la présence de l'enveloppe qui elle-même est de nature à perturber l'écoulement du vent, ce qui modifie la valeur de la pression locale autour du second capteur de pression.

En pratique, on peut prévoir que les moyens de commande comprennent :
- une interface d'entrée-sortie connectée aux capteurs de pression et au capteur de vitesse de flux d'air, et connectée à l'alimentation du moteur de ventilateur,
- des moyens de stockage de données, contenant une mémoire de programme avec un programme de pilotage mémorisé, et contenant une mémoire de données,
- un processeur apte à mettre en oeuvre le programme de pilotage en fonction des signaux reçus des capteurs de pression et du capteur de flux d'air,
- dans le programme de pilotage, une séquence de régulation de type PID qui pilote la vitesse du moteur de ventilateur au voisinage d'une valeur de consigne et qui régule la différence des signaux reçus des capteurs de pression,
- dans le programme de pilotage, une séquence d'acquisition qui scrute les signaux reçus sur l'interface d'entrée-sortie, et qui les mémorise dans les moyens de stockage de données,
- dans le programme de pilotage, un sous-programme de séquencement qui définit une série de valeurs de consigne correspondant chacune à une vitesse de rotation du moteur de ventilateur qui génère une différence de pression d'air choisie au cours d'une séquence de rotation.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe d'un local à tester, dans lequel a été installé un dispositif de mesure d'étanchéité selon un mode de réalisation de la présente invention ;
- la figure 2 est une vue de la face intérieure d'une porte soufflante installée dans le local de la figure 1 ;
- la figure 3 est une vue de côté en demi-coupe longitudinale d'un canal de passage d'air selon un mode de réalisation de l'invention ;
- les figures 4 et 5 sont deux vues en perspective du canal de passage d'air de la figure 3 ;
- la figure 6 est un schéma de connexion des principaux moyens de contrôle et d'entraînement du dispositif de mesure d'étanchéité selon l'invention ;
- la figure 7 est un diagramme illustrant la fonction de transfert entre la vitesse du flux mesuré par le capteur à fil chaud et le débit du ventilateur ; et
- la figure 8 illustre les mesures de débit en fonction des différences de pression établies dans le local à tester.

### DESCRIPTION DES MODES DE REALISATION PREFERES

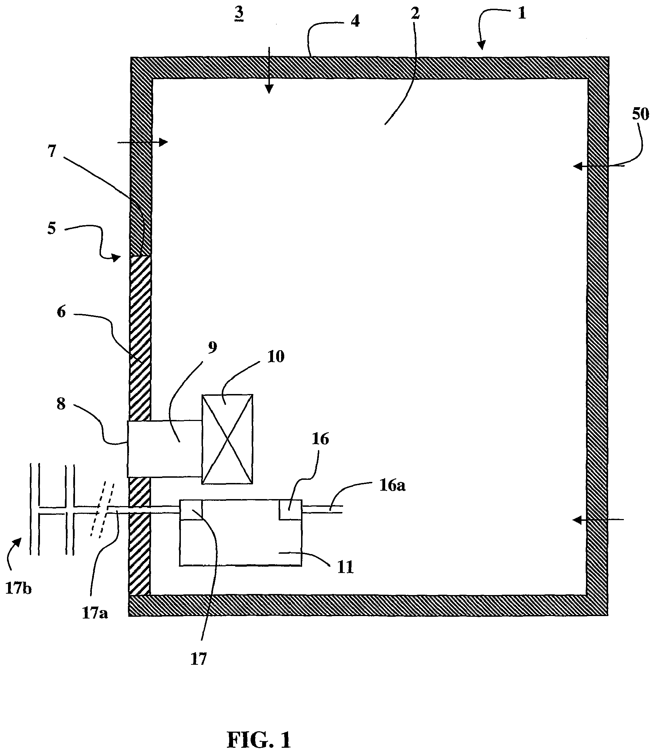

On a illustré sur la figure 1 un local 1 dont l'espace intérieur 2 est isolé de l'atmosphère extérieure 3 par une enveloppe 4 munie d'au moins une ouverture 5 obturable par une porte.

En matière de bâtiment, les enveloppes 4 isolant un local 1 ne sont pas parfaites, et il existe toujours des fuites 50. L'objet de l'invention est de mesurer ces fuites 50, que l'on caractérise par le débit d'air qu'elles laissent passer en fonction de la différence de pression entre l'espace intérieur 2 et l'atmosphère extérieure 3.

Le dispositif de mesure d'étanchéité à l'air de l'enveloppe 4 tel qu'illustré sur la figure 1 comprend une porte soufflante 6 que l'on adapte dans l'ouverture 5 en remplacement de la porte destinée à occulter normalement l'ouverture 5 du local 1.

La porte soufflante 6 est adaptée dans l'ouverture 5 avec des moyens d'étanchéité périphériques 7 tels que des joints d'étanchéité.

La porte soufflante 6 est munie d'un passage d'air comprenant une ouverture de porte 8 raccordée à une canalisation 9 munie d'un ventilateur ou turbine 10 et d'un canal de passage d'air. Le ventilateur 10 est entraîné en rotation par un moteur électrique en recevant l'énergie électrique d'une alimentation elle-même pilotée par des moyens de commande 11.

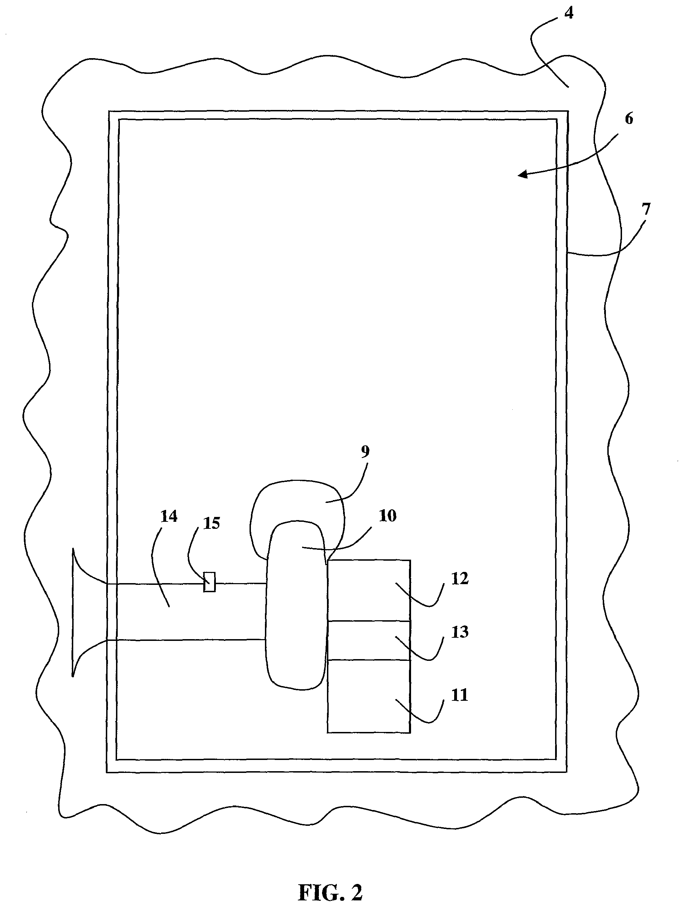

En se référant à la figure 2, on distingue la porte soufflante 6 vue de sa face intérieure au local 1 entouré de son enveloppe 4, la canalisation 9, le ventilateur 10, le moteur électrique 12, l'alimentation 13 et les moyens de commande 11, ainsi que le canal de passage d'air 14.

Le moteur 12 est un moteur électrique, apte à être piloté à différentes vitesses de rotation, et alimenté par une alimentation électrique 13 apte à modifier la vitesse du moteur 12. Par exemple, on a utilisé avec avantage un moteur 12 électrique triphasé asynchrone, alimenté par une alimentation 13 de type convertisseur monophasé/triphasé à fréquence variable. Le convertisseur détermine la fréquence d'alimentation du moteur, et donc sa vitesse avec précision. Le ventilateur 10 peut par exemple être une turbine à aspiration radiale et refoulement axial, de type escargot ou de type hélicoïdal, comme illustré sur la figure 2, le canal de passage d'air 14 étant connecté à la sortie du ventilateur 10, la canalisation 9 étant raccordée à l'entrée du ventilateur 10 et à l'ouverture de porte 5.

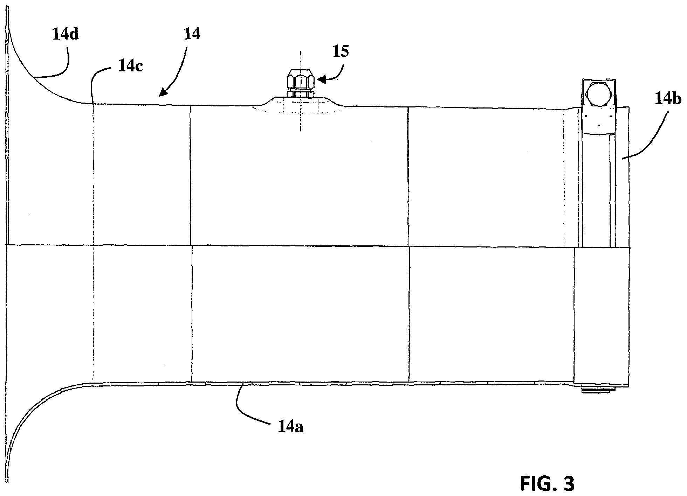

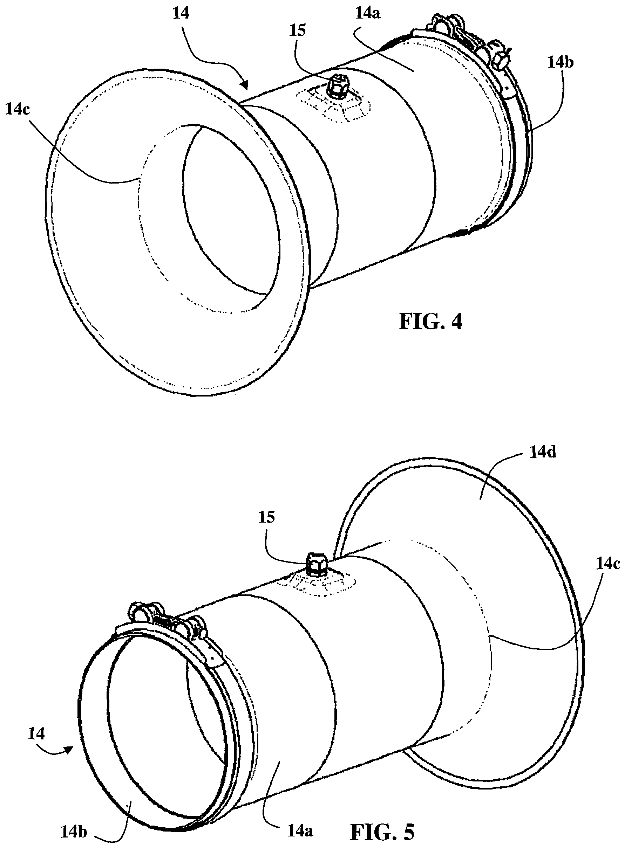

Le canal de passage d'air 14, illustré plus en détail sur les figures 3 à 5, est un manchon comportant un tronçon 14a généralement cylindrique dont une première extrémité 14b se raccorde à une gaine où est logé le ventilateur 10 et dont la seconde extrémité 14c se raccorde à un tronçon évasé 14d selon un profil longitudinal en arc. Dans la réalisation illustrée sur les figures, le profil longitudinal du tronçon évasé 14d est en quart de cercle.

Dans la partie médiane de la longueur du canal de passage d'air 14, on a placé un capteur de vitesse de flux d'air de type capteur à fil chaud 15, apte à mesurer une vitesse de déplacement du flux d'air à l'intérieur du canal de passage d'air 14. Un tel capteur à fil chaud est décrit par exemple dans les documents US 3,742,476 A ou US 6,658,931 B1.

Dans une application permettant un débit d'air de 15 000 m³ à l'heure, on peut par exemple utiliser un moteur 12 électrique triphasé asynchrone de 2,2 kW, un ventilateur 10 apte à générer ce débit, une dimension d'ouverture de porte 8 de 30 cm de diamètre, et un canal de passage d'air 14 dont le diamètre de tronçon cylindrique est de 50 cm environ et dont le diamètre maximal de sortie est de 86 cm environ. La longueur du canal de passage d'air 14 est, dans ce cas, d'environ 57 cm.

En se référant à nouveau à la figure 1, on distingue que les moyens de commande 11 comportent un premier capteur de pression 16 apte à produire un premier signal de pression image de la pression d'air dans l'espace intérieur 2 du local à tester 1, et un second capteur de pression 17 apte à produire un second signal de pression image de la pression d'air dans l'atmosphère extérieure 3 à l'écart de l'enveloppe 4 du local à tester 1. A cet effet, le premier capteur de pression 16 est raccordé à l'espace intérieur 2 par un canal de capteur intérieur 16a, tandis que le second capteur de pression 17 est raccordé à un canal de capteur extérieur 17a dont un tronçon s'étend à l'extérieur du local 1 jusqu'à une zone de captage 17b qui est nettement à l'écart de l'enveloppe 4 du local 1, selon une distance de plus de 5 m.

Le premier capteur de pression 16 et le second capteur de pression 17 constituent ensemble des moyens de mesure de la pression différentielle entre l'atmosphère extérieure 3 et l'espace intérieur 2 du local à tester 1.

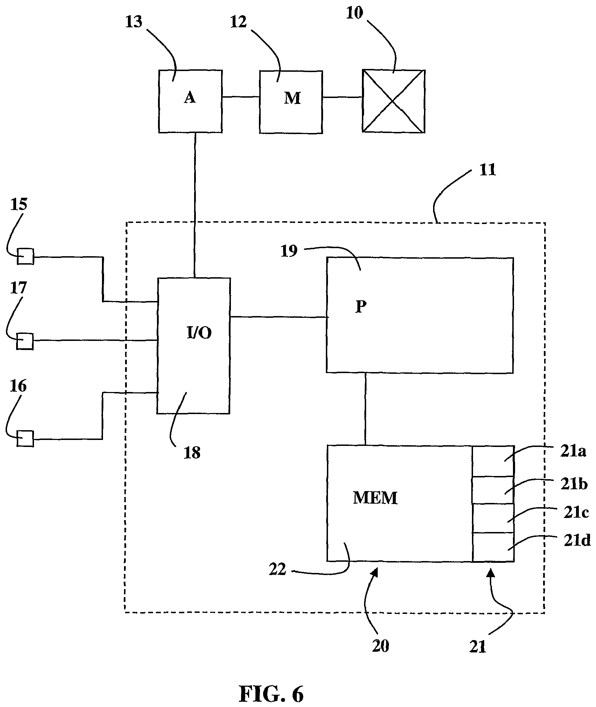

En considérant maintenant la figure 6, illustrant un schéma de connexion des éléments de commande du dispositif selon l'invention, on distingue une interface d'entrée-sortie 18, qui reçoit les signaux émis par le capteur à fil chaud 15, par le premier capteur de pression 16, et par le second capteur de pression 17, pour transmettre ces signaux à un processeur 19.

Le processeur 19, par exemple de type microprocesseur associé à ses périphériques habituels, coopère avec des moyens de stockage de données 20 comportant une mémoire de programme 21 et une mémoire de données 22. La mémoire de programme 21 contient un programme de pilotage mémorisé, comprenant une séquence de régulation 21a, une séquence d'acquisition 21b, un sous-programme de séquencement 21c, et une séquence de calcul 21d.

Le processeur 19 est apte à mettre en oeuvre le programme de pilotage contenu dans la mémoire de programme 21 en fonction des signaux reçus du capteur à fil chaud 15 et des capteurs de pression 16 et 17. Ainsi, le processeur 19 génère des signaux de commande qui sont transmis par l'interface d'entrée-sortie 18 à l'alimentation 13 qui elle-même fournit l'énergie électrique au moteur 12 pour entraîner en rotation le ventilateur 10.

La séquence de régulation 21a est par exemple de type PID, pour piloter la vitesse du moteur 12 de ventilation au voisinage d'une valeur de consigne et en régulant la différence des signaux reçus des capteurs de pression 16 et 17. On maintient ainsi la différence de pression d'air au voisinage d'une valeur choisie, dans une plage de variation inférieure à un écart prédéfini.

La séquence d'acquisition 21b permet au processeur 19 de scruter les signaux reçus sur l'interface d'entrée-sortie 18, et de les mémoriser dans les moyens de stockage de données 20.

Le sous-programme de séquencement 21c effectue plusieurs séquences de régulation de la pression différentielle au cours de plusieurs séquences de rotation successives produisant des différences de pression d'air choisies et étagées entre une valeur minimale et une valeur maximale de différence de pression. Pour cela, le sous-programme de séquencement 21c génère une succession temporelle de valeurs de consigne distinctes. Chaque valeur de consigne est utilisée au cours d'une séquence de rotation pour fixer la vitesse de rotation du moteur de ventilateur 12 à une valeur qui génère l'une des différences de pression d'air choisies et étagées entre la valeur minimale et la valeur maximale de différence de pression. Simultanément, au cours de chaque séquence de rotation, on applique une séquence de régulation 21a.

Au cours de chaque séquence de rotation, le programme de pilotage effectue une série de séquences d'acquisition 21b pendant une période de temps prédéfinie, par exemple 3 000 prises de mesure pendant 30 s.

L'interface d'entrée-sortie 18, le processeur 19 et les moyens de stockage de données 20 avec les programmes enregistrés constituent des moyens de commande 11 qui sont adaptés pour piloter la vitesse du moteur 12 de ventilateur 10 selon plusieurs vitesses choisies au cours desquelles on mesure les pressions différentielles et les vitesses de flux dans le ventilateur 10.

De préférence, les moyens de commande 11 sont adaptés pour piloter la vitesse de plusieurs moteurs 12 de ventilateur, de façon à réguler la différence des signaux reçus des capteurs de pression 16 et 17, et de façon à recevoir et mémoriser les signaux reçus des capteurs de vitesse de flux d'air 15 associés aux ventilateurs 10.

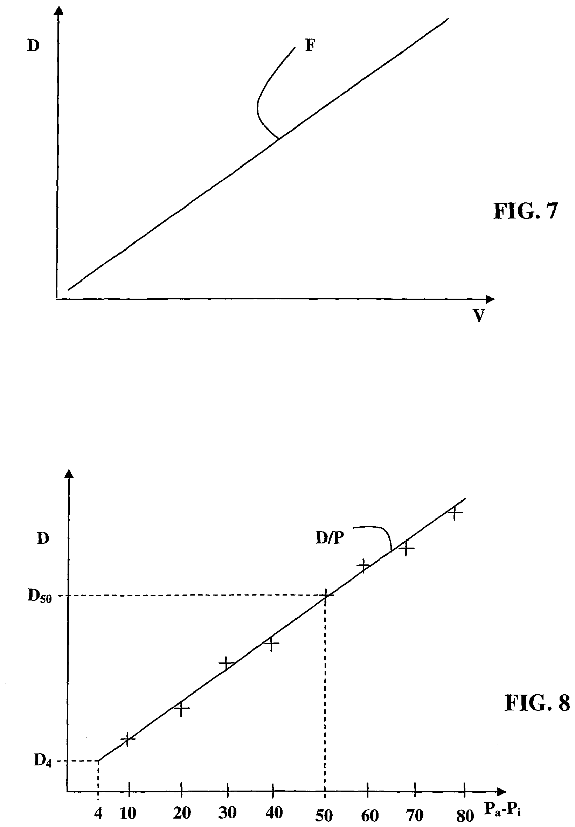

Dans son fonctionnement, le dispositif tel que décrit en relation avec les figures jointes met en oeuvre un procédé permettant de mesurer l'étanchéité à l'air de l'enveloppe 4 isolant l'espace intérieur 2 du local 1 vis-à-vis de l'atmosphère extérieure 3, le procédé comprenant les étapes suivantes :
a) dans l'ouverture 5 de l'enveloppe 4, on dispose une porte soufflante 6 munie d'un ventilateur 10 apte à créer une différence de pression d'air entre l'espace intérieur 2 du local 1 et l'atmosphère extérieure 3,
b) on entraîne en rotation le ventilateur 10 selon une série de séquences distinctes aptes à créer une série de différences de pression d'air choisies et étagées entre une valeur minimale et une valeur maximale de différence de pression,
c) on mesure la différence de pression au cours de chaque séquence de rotation,
d) on évalue le débit de fuite de l'enveloppe 4 au cours de chaque séquence de rotation,
e) on déduit le débit de fuite de l'enveloppe 4 pour une différence de pression d'air normalisée,
   - au cours de l'étape b), on modifie les différences de pression d'air par une modification de la vitesse du ventilateur 10,
   - au cours de l'étape b), on régule la différence de pression d'air pour la maintenir dans une plage de variation inférieure à un écart prédéfini en agissant sur la vitesse du ventilateur 10,
   - au cours de l'étape d), on mesure directement la vitesse de flux d'air dans le ventilateur 10 pour en déduire son débit par calcul à l'aide d'une fonction de tranfert F (figure 7).

Au cours d'une étape préalable au fonctionnement normal du dispositif, on réalise l'étalonnage du ventilateur 10 pour déterminer la fonction de transfert F entre la vitesse du flux d'air mesuré par le capteur à fil chaud 15 et le débit du ventilateur 10. La figure 7 illustre cette fonction de transfert. On relève pour cela la valeur de vitesse V de flux d'air donnée par le capteur à fil chaud 15 pour plusieurs vitesses de rotation du ventilateur 10, et on mesure simultanément pour chacune de ces valeurs de vitesse V, par toute méthode appropriée, le débit réel D d'air dans le ventilateur 10. La courbe F permet ensuite de connaître, pour chaque valeur de vitesse V donnée par le capteur à fil chaud 15, la valeur réelle du débit D d'air dans le ventilateur 10.

Dans tous les cas, le programme de pilotage comprend une séquence de calcul 21d pour calculer la valeur globale de fuite du local 1 à une pression normalisée, en fonction des signaux mémorisés au cours des séquences d'acquisition 21b.

La figure 8 illustre l'exploitation des résultats de mesures de débit réalisée par la séquence de calcul 21d. En abscisse, on porte la différence de pression Pa - Pi résultant des mesures faites par les capteurs 17 et 16 respectifs. En ordonnée, on porte le débit D mesuré par le capteur à fil chaud 15 après application de la fonction de transfert F. Les mesures sont portées sur le graphique (c'est-à-dire dans une matrice de calcul) pour chacune des valeurs de vitesse de rotation du ventilateur 10. On réalise une régression linéaire des points mesurés selon la méthode des moindres carrés, afin d'obtenir la droite D/P, qui définit la relation entre le débit de fuite et la pression différentielle, et qui caractérise l'enveloppe 4 du local 1.

On peut ensuite en déduire le débit D4 à la pression différentielle 4 Pa, pression différentielle dans laquelle on se place pour vérifier le respect des normes applicables dans les bâtiments, mais pression qui serait trop faible pour réaliser des mesures fiables. On calcule le cas échéant les indicateurs Q4Pa-surf et n50.

La présente invention n'est pas limitée aux modes de réalisation qui ont été explicitement décrits, mais elle en inclut les diverses variantes et généralisations contenues dans le domaine des revendications ci-après.

## Revendications

1. Procédé pour mesurer l'étanchéité à l'air de l'enveloppe (4) isolant l'espace intérieur (2) d'un local (1) vis-à-vis de l'atmosphère extérieure (3), comprenant les étapes suivantes :
a) dans au moins une ouverture (5) de l'enveloppe (4), disposer une porte soufflante (6) munie d'au moins un ventilateur (10) apte à créer une différence de pression d'air entre l'espace intérieur (2) du local (1) et l'atmosphère extérieure (3),
b) entraîner en rotation le ventilateur (10) selon une série de séquences de rotation distinctes aptes à créer une série de différences de pression d'air choisies et étagées entre une valeur minimale et une valeur maximale de différence de pression,
c) mesurer la différence de pression au cours de chaque séquence de rotation,
d) évaluer le débit de fuite de l'enveloppe (4) au cours de chaque séquence de rotation,
e) en déduire le débit de fuite de l'enveloppe (4) pour une différence de pression d'air normalisée,
dans lequel :
- au cours de l'étape b), on modifie les différences de pression d'air par une modification de la vitesse du ventilateur (10),
**caractérisé en ce que** :
- au cours de chaque séquence de rotation de l'étape b), on régule la différence de pression d'air pour la maintenir dans une plage de variation inférieure à un écart prédéfini en agissant sur la vitesse du ventilateur (10),
- au cours de l'étape d), on mesure directement la vitesse du flux d'air dans le ventilateur (10), et on en déduit le débit de fuite de l'enveloppe par calcul à l'aide d'une fonction de transfert (F).

2. Procédé selon la revendication 1, **caractérisé en ce que** au cours de l'étape d) on mesure la vitesse du flux d'air à l'aide d'un capteur à fil chaud (15).

3. Procédé selon la revendication 2, **caractérisé en ce que**, à chaque séquence de rotation, on relève la valeur de vitesse du flux d'air par une série de mesures effectuées pendant une période de temps prédéfinie.

4. Procédé selon l'une des revendications 2 ou 3, **caractérisé en ce qu'**on prévoit une étape préalable d'étalonnage du ventilateur (10) pour déterminer la fonction de transfert (F) entre la vitesse du flux mesurée par le capteur à fil chaud (15) et le débit du ventilateur (10).

5. Procédé selon l'une quelconque des revendications 1 à 4, **caractérisé en ce que** :
- on prévoit une pluralité de portes soufflantes (6),
- en fonction du volume de l'espace intérieur (2) du local à tester (1), on dispose un nombre approprié de portes soufflantes (6),
- au cours de l'étape b), on agit sur la vitesse des ventilateurs (10) de toutes les portes soufflantes (6) pour réguler la différence de pression d'air,
- au cours de l'étape d), on somme les mesures de débit d'air des portes soufflantes (6).

6. Dispositif pour mesurer l'étanchéité à l'air de l'enveloppe (4) isolant l'espace intérieur (2) d'un local (1) vis-à-vis de l'atmosphère extérieure (3), comprenant :
- au moins une porte soufflante (6) ayant elle-même au moins un ventilateur (10) associé à un canal de passage d'air (14),
- un moteur (12) d'entraînement du ventilateur (10),
- une alimentation (13) et des moyens de commande (11) pour piloter la rotation du moteur (12),
- des moyens de mesure de la pression différentielle (16, 17) entre l'atmosphère extérieure (3) et l'espace intérieur (2) du local (1) à tester,
**caractérisé en ce que** :
- les moyens de commande (11) comprenant des moyens (19, 21a, 21b, 21c) pour piloter la vitesse de rotation du moteur (12) à des vitesses différentes de façon à établir la pression différentielle selon une série de valeurs de pression différentielle choisies entre une valeur minimale et une valeur maximale de pression différentielle, et de façon à maintenir la pression différentielle au voisinage de chaque valeur choisie, dans une plage de variation inférieure à un écart prédéfini,
- les moyens pour évaluer le débit de fuite de l'enveloppe (4) comprennent un capteur de vitesse de flux d'air (15) dans le canal de passage d'air (14),
- les moyens pour évaluer le débit de fuite de l'enveloppe (4) comprennent des moyens de calcul aptes à calculer le débit d'air dans le passage d'air (14) en fonction de la vitesse du flux d'air (15) par application d'une fonction de transfert (F).

7. Dispositif selon la revendication 6, **caractérisé en ce que** le capteur de vitesse de flux d'air est un capteur à fil chaud (15).

8. Dispositif selon l'une des revendications 6 ou 7, **caractérisé en ce que** le canal de passage d'air (14) est un manchon comportant un tronçon généralement cylindrique (14a) dont une première extrémité (14b) se raccorde à une gaine où est logé le ventilateur (10) et dont la seconde extrémité (14c) se raccorde à un tronçon évasé (14d) selon un profil longitudinal en arc.

9. Dispositif selon la revendication 8, **caractérisé en ce que** :
- le tronçon généralement cylindrique (14a) présente une longueur sensiblement quatre fois supérieure à la longueur du tronçon évasé (14d),
- le profil longitudinal du tronçon évasé (14d) est en quart de cercle,
- le capteur de vitesse de flux d'air (15) est placé en partie médiane de la longueur du canal de passage d'air (14).

10. Dispositif selon l'une quelconque des revendications 6 à 9, **caractérisé en ce que** les moyens de mesure de la pression différentielle comprennent un premier capteur de pression (16) apte à produire un premier signal de pression image de la pression d'air dans l'espace intérieur (2) du local à tester (1), et un second capteur de pression (17) apte à produire un second signal de pression image de la pression d'air dans l'atmosphère extérieure (3) à l'écart de l'enveloppe (4) du local à tester (1).

11. Dispositif selon l'une quelconque des revendications 6 à 10, **caractérisé en ce que** les moyens de commande (11) comprennent :
- une interface d'entrée-sortie (18) connectée aux capteurs de pression (16, 17) et au capteur de vitesse de flux d'air (15), et connectée à l'alimentation (13) du moteur de ventilateur (12),
- des moyens de stockage de données (20), contenant une mémoire de programme (21) avec un programme de pilotage mémorisé, et contenant une mémoire de données (22),
- un processeur (19) apte à mettre en oeuvre le programme de pilotage en fonction des signaux reçus des capteurs de pression (16, 17) et du capteur de vitesse de flux d'air (15),
- dans le programme de pilotage, une séquence de régulation (21a) de type PID qui pilote la vitesse du moteur de ventilateur (12) au voisinage d'une valeur de consigne et qui régule la différence des signaux reçus des capteurs de pression (16, 17),
- dans le programme de pilotage, une séquence d'acquisition (21b) qui scrute les signaux reçus sur l'interface d'entrée-sortie (18), et qui les mémorise dans les moyens de stockage de données (20),
- dans le programme de pilotage, un sous programme de séquencement (21c) qui définit un série de valeurs de consigne correspondant chacune à une vitesse de rotation du moteur de ventilateur (12) qui génère une différence de pression d'air choisie au cours d'une séquence de rotation.

12. Dispositif selon la revendication 11, **caractérisé en ce que**, au cours de chaque séquence de rotation, le programme de pilotage effectue une série de séquences d'acquisition (21b) pendant une période de temps prédéfinie.

13. Dispositif selon l'une des revendications 11 ou 12, **caractérisé en ce que** les moyens de commande (11) sont adaptés pour piloter la vitesse de plusieurs moteurs (12) de ventilateur de façon à réguler la différence des signaux reçus des capteurs de pression (16, 17), et de façon à recevoir et mémoriser les signaux reçus des capteurs de vitesse de flux d'air (15) associés aux ventilateurs (10).

14. Dispositif selon l'une quelconque des revendications 11 à 13, **caractérisé en ce que** le programme de pilotage comprend une séquence de calcul (21d) pour calculer la valeur globale de fuite du local (1) à une pression normalisée, en fonction des signaux mémorisés au cours des séquences d'acquisition (21b).

## Patentansprüche

1. Verfahren zum Messen der Luftdichtigkeit des Gehäuses (4), das den Innenraum (2) einer Umgebung (1) gegenüber der Außenatmosphäre (3) isoliert, umfassend die nachfolgenden Schritte:
a) in mindestens einer Öffnung (5) des Gehäuses (4), Anordnen einer Gebläseeinheit (6), die mit mindestens einem Lüfter (10) versehen ist, ausgebildet eine Luftdruckdifferenz zwischen dem Innenraum (2) der Umgebung (1) und der Außenatmosphäre (3) zu erzeugen,
b) Bewirken einer Drehung des Lüfters (10), anhand einer Folge von separaten Rotationssequenzen, die geeignet sind, eine Folge ausgewählter Luftdruckdifferenzen zu erzeugen und zwischen einem Minimalwert und einem Maximalwert der Druckdifferenz liegen,
c) Messen der Druckdifferenz während jeder der Rotationssequenzen,
d) Auswerten der Leckagerate des Gehäuses (4) während jeder der Rotationssequenzen,
e) Herleiten der Leckagerate des Gehäuses (4) für eine normalisierte Luftdruckdifferenz,
in welchem:
- während des Schritts b) die Luftdruckdifferenz mittels einer Modifizierung der Geschwindigkeit des Lüfters (10) modifiziert wird,
**dadurch gekennzeichnet, dass**:
- während jeder Rotationssequenz aus dem Schritt b) die Luftdruckdifferenz durch Einwirkung auf die Geschwindigkeit des Lüfters (10) geregelt wird, um diesen innerhalb eines Variationsbereichs, geringer als eine vordefinierte Abweichung, zu halten,
- während des Schritts d) die Geschwindigkeit des Luftstroms in dem Lüfter (10) direkt gemessen wird, und die Leckagerate des Gehäuses durch Berechnung mit Hilfe einer Übertragungsfunktion (F) abgeleitet wird.

2. Verfahren nach Anspruch 1, **dadurch gekennzeichnet, dass** während des Schritts d) die Geschwindigkeit des Luftstroms mit Hilfe eines Hitzdrahtsensors (15) gemessen wird.

3. Verfahren nach Anspruch 2, **dadurch gekennzeichnet, dass** bei jeder Rotationssequenz der Wert der Geschwindigkeit des Luftstroms, mittels einer Messfolge aufgezeichnet wird, die während einer vordefinierten Zeitspanne durchgeführt wird.

4. Verfahren nach Anspruch 2 oder 3, **dadurch gekennzeichnet, dass** ein vorausgehender Schritt zur Kalibrierung des Lüfters (10) vorgesehen ist, um die Übertragungsfunktion (F) zwischen der Geschwindigkeit des Stroms, die mit dem Hitzdrahtsensor (15) gemessen wird und dem Durchfluss des Lüfters (10) zu bestimmen.

5. Verfahren nach einem der Ansprüche 1 bis 4, **dadurch gekennzeichnet, dass**:
- eine Mehrzahl an Gebläseeinheiten (6) vorgesehen ist,
- dass abhängig vom Volumen des Innenraums (2) der zu prüfenden Umgebung (1) eine geeignete Anzahl an Gebläseeinheiten (6) angeordnet wird,
- während des Schritts b), auf die Geschwindigkeit der Lüfter (10) aller Gebläseeinheiten (6) eingewirkt wird, um die Luftdruckdifferenz zu regeln,
- während des Schritts d), die Messungen des Luftdurchflusses der Gebläseeinheiten (6) summiert werden.

6. Vorrichtung zum Messen der Luftdichtigkeit des Gehäuses (4), das den Innenraum (2) einer Umgebung (1) gegenüber der Außenatmosphäre (3) isoliert, umfassend:
- mindestens eine Gebläseeinheit (6), welche mindestens einen einem Luftkanal (14) zugeordneten Lüfter (10) aufweist,
- einen Motor (12) zum Antrieb des Lüfters (10),
- eine Energieversorgung (13) und Steuerungsmittel (11), um die Rotation des Motors (12) zu steuern,
- Mittel zur Messung des Differenzdrucks (16, 17) zwischen der Außenatmosphäre (3) und dem Innenraum (2) der zu prüfenden Umgebung (1),
**dadurch gekennzeichnet, dass**
- die Steuerungsmittel (11) Mittel (19, 21a, 21b, 21c) zum Steuern der Rotationsgeschwindigkeit des Motors (12) in verschiedenen Geschwindigkeiten umfassen, in einer Art und Weise, um einen Differenzdruck anhand einer Folge von ausgewählten Differenzdruckwerten, zwischen einem Minimalwert und einem Maximalwert des Differenzdrucks, festzulegen, und in einer Art und Weise, um den Differenzdruck in der Nähe eines jeden ausgewählten Werts, innerhalb eines Variationsbereichs, geringer als eine vordefinierte Abweichung, zu halten,
- die Mittel zum Auswerten der Leckagerate des Gehäuses (4) einen Sensor zur Messung der Geschwindigkeit des Luftstroms (15) innerhalb des Luftkanals (14) umfassen,
- die Mittel zum Auswerten der Leckagerate des Gehäuses (4) Berechnungsmittel umfassen, die ausgebildet sind, den Luftdurchfluss in der Luftpassage (14) anhand einer Funktion der Geschwindigkeit des Luftstroms (15) durch Anwendung einer Übertragungsfunktion (F) zu berechnen.

7. Vorrichtung nach Anspruch 6, **dadurch gekennzeichnet, dass** der Sensor zur Messung der Geschwindigkeit des Luftstroms ein Hitzdrahtsensor (15) ist.

8. Vorrichtung nach einem der Ansprüche 6 oder 7, **dadurch gekennzeichnet, dass** der Luftkanal (14) eine Hülse ist, mit einem im Wesentlichen zylindrischen Abschnitt (14a), dessen erstes Ende (14b) sich an eine Ummantelung anschließt, wo der Lüfter (10) angeordnet ist, und dessen zweites Ende (14c) sich an einen, sich entsprechend eines bogenförmigen Längsprofils erweiternden, Abschnitt (14d) anschließt.

9. Vorrichtung nach Anspruch 8, **dadurch gekennzeichnet, dass**:
- der im Wesentlichen zylindrische Abschnitt (14a) eine Länge aufweist, die im Wesentlichen viermal größer ist, als die Länge des sich erweiternden Abschnitts (14d),
- das Längsprofil des sich erweiternden Abschnitts (14d) einen Viertelkreis darstellt,
- der Sensor zur Messung der Geschwindigkeit des Luftstroms (15) an einem Mittelteil der Länge des Luftkanals (14) angeordnet ist,

10. Vorrichtung nach einem der Ansprüche 6 bis 9, **dadurch gekennzeichnet, dass** die Mittel zur Messung der Druckdifferenz einen ersten Druckmesser (16), der ausgebildet ist, ein erstes bildgebendes Drucksignal des Luftdrucks innerhalb des Innenraums (2) der zu prüfenden Umgebung (1) zu erzeugen, und einen zweiten Druckmesser (17), der ausgebildet ist, ein zweites bildgebendes Drucksignal des Luftdrucks in der Außenatmosphäre (3) mit Abstand zum Gehäuse (4) der zu prüfenden Umgebung (1) zu erzeugen, umfassen.

11. Vorrichtung nach einem der Ansprüche 6 bis 10, **dadurch gekennzeichnet, dass** die Steuerungsmittel (11) umfassen:
- eine Eingabe-Ausgabe-Schnittstelle (18), die an die Druckmesser (16, 17) und an den Sensor zur Messung der Geschwindigkeit des Luftstroms (15) angeschlossen ist, und an die Energiezufuhr (13) des Motors des Lüfters (12) angeschlossen ist,
- Datenspeichermittel (20), die einen Programmspeicher (21) mit einem gespeicherten Steuerprogramm und Datenspeicher (22) aufweisen,
- einen Prozessor (19), der ausgebildet ist, das Steuerprogramm anhand der empfangenen Signale der Druckmesser (16, 17) und des Sensors zur Messung der Geschwindigkeit des Luftstroms (15) umzusetzen,
- in dem Steuerprogramm eine Regelungssequenz (21a) des PID-Typs, die die Geschwindigkeit des Motors des Lüfters (12) in der Nähe eines Sollwerts steuert, und die die Differenz der von den Druckmessern (16, 17) empfangenen Signale regelt,
- in dem Steuerprogramm eine Erfassungssequenz (21b), die die über die Eingabe-Ausgabe-Schnittstelle (18) empfangenen Signale abfragt, und die diese in den Datenspeichermitteln (20) abspeichert,
- in dem Steuerprogramm ein Sequenz-Unterprogramm (21c), das eine Folge an Sollwerten definiert, die jeweils einer Rotationsgeschwindigkeit des Motors des Lüfters (12) entsprechen, die während einer Rotationssequenz eine ausgewählte Luftdruckdifferenz generieren.

12. Vorrichtung nach Anspruch 11, **dadurch gekennzeichnet, dass** das Steuerprogramm während jeder Rotationssequenz eine Folge von Erfassungssequenzen (21b) innerhalb einer vordefinierten Zeitspanne durchführt.

13. Vorrichtung nach einem der Ansprüche 11 oder 12, **dadurch gekennzeichnet, dass** die Steuerungsmittel (11) ausgebildet sind, die Geschwindigkeit der Mehrzahl an Motoren (12) des Lüfters in einer Art und Weise zu steuern, in der die Differenz der von den Druckmessern (16, 17) empfangenen Signale geregelt wird, und in einer Art und Weise, in der die von den Sensoren zur Messung der Geschwindigkeit des Luftstroms (15), die an die Lüfter (10) angeschlossen sind, empfangenen Signale empfangen und gespeichert werden.

14. Vorrichtung nach einem der Ansprüche 11 bis 13, **dadurch gekennzeichnet, dass** das Steuerprogramm eine Berechnungssequenz (21d) umfasst, zur Berechnung des globalen Leckagewerts der Umgebung (1) bei einem normalisierten Druck, anhand einer Funktion der während der Erfassungssequenzen (21b) gespeicherten Signale.

## Claims

1. Method for measuring the air-tightness of the enclosure (4) isolating the internal space (2) of a room (1) from the external atmosphere (3), comprising the following steps:
a) disposing, in at least one opening (5) of the enclosure (4), a blower door (6) provided with at least one fan (10) capable of generating an air pressure difference between the internal space (2) of the room (1) and the external atmosphere (3);
b) rotating the fan (10) according to a series of distinct rotation sequences capable of generating a series of air pressure differences selected and tiered between a minimum and a maximum pressure difference value;
c) measuring the pressure difference during each rotation sequence;
d) assessing the leak rate of the enclosure (4) during each rotation sequence;
e) deducing therefrom the leak rate of the enclosure (4) for a normalised air pressure difference;
wherein:
- during step b), the air pressure differences are modified by modifying the speed of the fan (10);
**characterized in that**:
- during each rotation sequence of step b), the air pressure difference is controlled so that it is kept within a variation range below a predefined deviation by adjusting the speed of the fan (10);
- during step d), the speed of the air flow in the fan (10) is measured directly, and the leak rate of the enclosure is deduced therefrom through computation using a transfer function (F).

2. Method according to Claim 1, **characterized in that**, during step d), the speed of the air flow is measured using a hot wire sensor (15).

3. Method according to Claim 2, **characterized in that**, for every rotation sequence, the speed value of the air flow is recorded by a series of measurements carried out during a predefined time period.

4. Method according to one of Claims 2 or 3, **characterized in that** a prior step of calibrating the fan (10) is provided to determine the transfer function (F) between the speed of the flow measured by the hot wire sensor (15) and the flow rate of the fan (10).

5. Method according to any one of Claims 1 to 4, **characterized in that**:
- a plurality of blower doors (6) is provided;
- a suitable number of blower doors (6) is arranged as a function of the volume of the internal space (2) of the room (1) to be tested;
- during step b), the speed of the fans (10) of all the blower doors (6) is adjusted to control the air pressure difference;
- during step d), the air flow measurements of the blower doors (6) are totalled.

6. Device for measuring the air-tightness of the enclosure (4) isolating the internal space (2) of a room (1) from the external atmosphere (3), comprising:
- at least one blower door (6), which has at least one fan (10) associated with an air passage channel (14);
- a motor (12) for driving the fan (10);
- a power supply (13) and control means (11) for controlling the rotation of the motor (12);
- means (16, 17) for measuring the differential pressure between the external atmosphere (3) and the internal space (2) of the room (1) to be tested; **characterized in that**:
- the control means (11) comprise means (19, 21a, 21b, 21c) for controlling the rotation speed of the motor (12) at various speeds, so as to establish the differential pressure according to a series of differential pressure values selected between a minimum and a maximum differential pressure value, and so as to keep the differential pressure near each selected value, within a variation range below a predefined deviation;
- the means for assessing the leak rate of the enclosure (4) comprise an air flow speed sensor (15) in the air passage channel (14);
- the means for assessing the leak rate of the enclosure (4) comprise computation means capable of computing the air flow in the air passage (14) as a function of the speed of the air flow (15) by applying a transfer function (F).

7. Device according to Claim 6, **characterized in that** the air flow speed sensor is a hot wire sensor (15).

8. Device according to one of Claims 6 or 7, **characterized in that** the air passage channel (14) is a sleeve comprising a generally cylindrical section (14a), a first end (14b) of which connects to a duct, in which the fan (10) is housed, and the second end (14c) of which connects to a flared section (14d) with a longitudinal arc profile.

9. Device according to Claim 8, **characterized in that**:
- the length of the generally cylindrical section (14a) is substantially four times greater than the length of the flared section (14d);
- the longitudinal profile of the flared section (14d) is a quarter circle;
- the air flow speed sensor (15) is placed in the middle section of the length of the air passage channel (14) .

10. Device according to any one of Claims 6 to 9, **characterized in that** the means for measuring the differential pressure comprise a first pressure sensor (16) capable of producing a first pressure signal that reflects the air pressure in the internal space (2) of the room (1) to be tested, and a second pressure sensor (17) capable of producing a second pressure signal that reflects the air pressure in the external atmosphere (3) at a distance from the enclosure (4) of the room (1) to be tested.

11. Device according to any one of Claims 6 to 10, **characterized in that** the control means (11) comprise:
- an input-output interface (18) connected to the pressure sensors (16, 17) and to the air flow speed sensor (15), and connected to the power supply (13) of the fan motor (12);
- data storage means (20), containing a program memory (21) with a stored control program, and containing a data memory (22);
- a processor (19) capable of implementing the control program as a function of the signals received from the pressure sensors (16, 17) and from the air flow speed sensor (15);
- a PID type control sequence (21a), in the control program, which sequence controls the speed of the fan motor (12) near a setpoint value and which controls the difference in the signals received from the pressure sensors (16, 17);
- an acquisition sequence (21b), in the control program, which sequence scans the signals received on the input-output interface (18) and which stores them in the data storage means (20);
- a sequencing sub-program (21c), in the control program, which sub-program defines a series of setpoint values each corresponding to a rotation speed of the fan motor (12) that generates an air pressure difference selected during a rotation sequence.

12. Device according to Claim 11, **characterized in that**, during each rotation sequence, the control program performs a series of acquisition sequences (21b) during a predefined time period.

13. Device according to one of Claims 11 or 12, **characterized in that** the control means (11) are adapted to control the speed of a plurality of fan motors (12), so as to control the difference in the signals received from the pressure sensors (16, 17), and so as to receive and store the signals received from the air flow speed sensors (15) associated with the fans (10).

14. Device according to any one of Claims 11 to 13, **characterized in that** the control program comprises a computation sequence (21d) for computing the overall leak value of the room (1) at a normalised pressure, as a function of the signals stored during the acquisition sequences (21b).
